# FASCICULE DE BREVET EUROPEEN

(11) **EP 2 546 614 B1**
(45) Date de publication et mention de la délivrance du brevet: **10.01.2018**
(21) Numéro de dépôt: 12305837.2
(22) Date de dépôt: 12.07.2012
(51) Int. Cl.: G01D 11/24

(54) **Dispositif capteur ou détecteur avec un bouchon guide-câble perfectionné**
Sensor- oder Detektorvorrichtung mit einem perfektionierten Kabelführungsstöpsel
Detector or sensor device with an improved cable guide plug

(30) Priorité: 15.07.2011 FR 1156466
(43) Date de publication de la demande: 16.01.2013
(73) Titulaire: Senstronic (Société Par Actions Simplifiée), 67700 Saverne (FR)
(72) Inventeur: Franc, Joël, 67201 Eckbolsheim (FR); Kirchdoerfer, Rémy, 1117 Grancy (CH)
(74) Mandataire: Nuss, Laurent

(56) Documents cités:
- WO-A1-2007/131374
- WO-A2-2005/064278
- DE-A1- 19 504 608
- DE-C1- 19 544 815
- US-A1- 2001 023 153

## Description

La présente invention concerne le domaine des dispositifs électroniques dans lesquels une carte électronique est montée dans un boîtier et un matériau d'enrobage est mis en oeuvre pour protéger et isoler ladite carte, et pour garantir son blocage en position dans le boîtier.

Plus particulièrement, invention concerne un dispositif capteur ou détecteur, comprenant un boîtier sous la forme d'un corps creux tubulaire, préférentiellement de section circulaire, avec une première extrémité longitudinale formant face active et une seconde extrémité, opposée à la première, dont l'ouverture est traversée par le câble de connexion et est obturée par un bouchon rapporté. Ce dispositif comprend également une carte ou un support analogue, portant les composants électroniques dudit capteur ou détecteur et monté dans ledit boîtier, en étant enrobé, préférentiellement totalement noyé, dans un matériau de remplissage isolant, tel qu'une résine ou analogue, également présent dans ledit boîtier et comblant sensiblement la totalité du volume intérieur restant de ce dernier.

Une difficulté spécifique pour la réalisation de ce type de dispositif réside dans la nécessité d'éviter tout contact entre, d'une part, la carte électronique et les composants qu'elle porte et, d'autre part, le boîtier, généralement métallique, pour des raisons électriques (court-circuit, mise à la terre) et mécaniques (chocs, vibrations), tout en favorisant si possible un enrobage optimal de la carte et des composants (limitation des possibles obstacles à la répartition homogène de la résine dans le boîtier et enrobage de la majorité de la carte).

Par le document DE-A-195 04 608, on connaît un dispositif capteur du type précité et un procédé de fabrication d'un tel dispositif capteur. Plus précisément, ce document antérieur présente deux modes de réalisation d'un tel capteur et de son procédé de fabrication, ce en relation avec les figures 1 et 2, d'une part, et avec les figures 3 et 4, d'autre part.

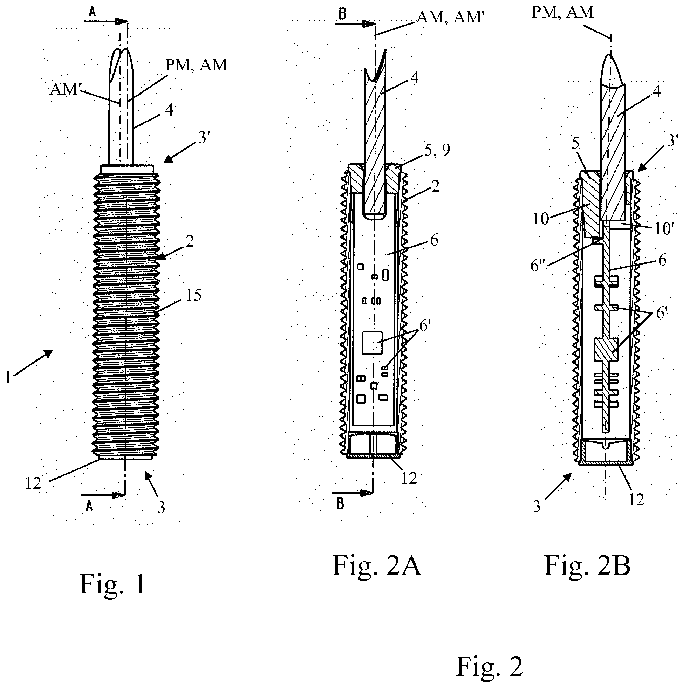

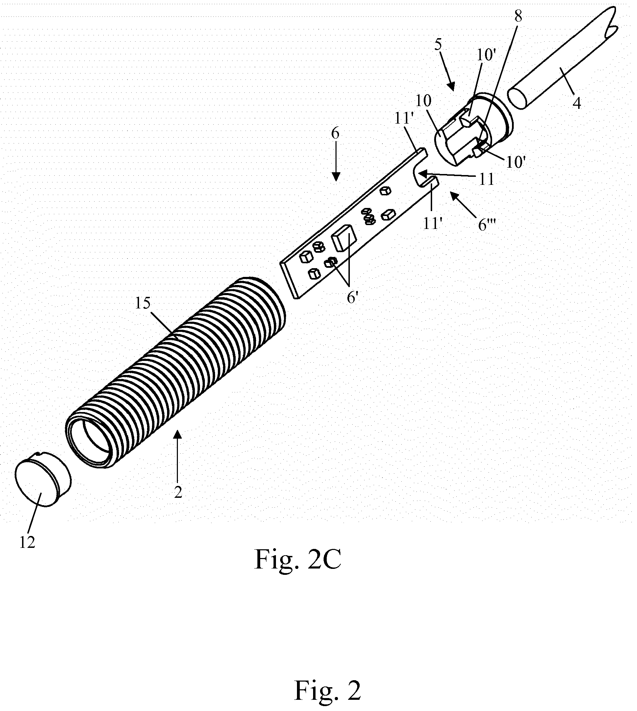

Dans le cadre du premier mode de réalisation (figures 1 et 2), il est prévu un bouchon obturateur formant connecteur (avec des broches), donc non traversé par un câble de raccordement. Ce bouchon obturateur comporte une cavité large recevant un prolongement d'extrémité de la carte, portant une DEL. Ce prolongement est reçu en engagement libre et sans calage dans la cavité précitée et doit être immobilisé et fixé par scellage dans cette dernière au moyen d'une colle 62.

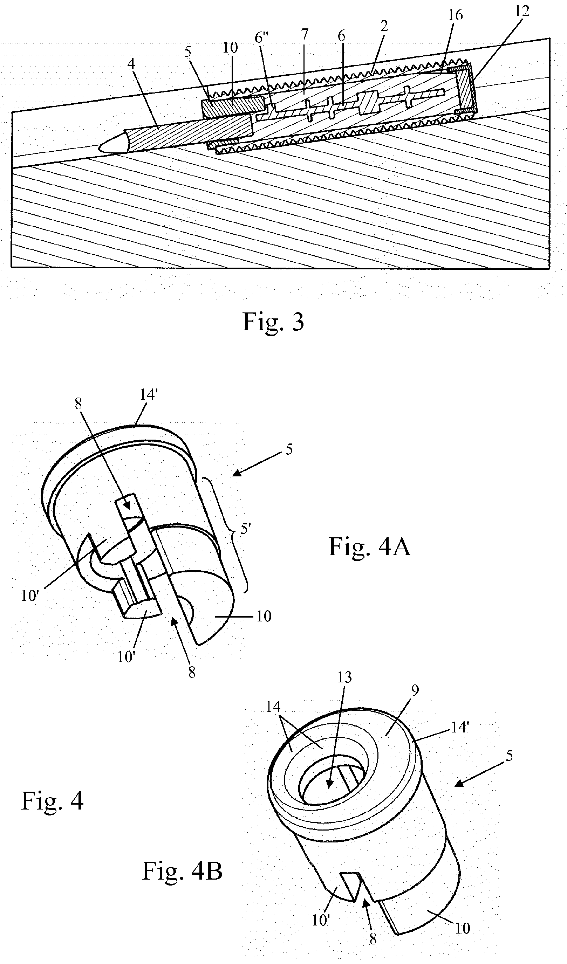

Dans le cadre du second mode de réalisation du document DE 195 04 608 (figures 3 et 4), un câble de connexion est prévu pour la carte. Ce câble traverse un corps formant bouchon d'obturation et recevant par engagement une partie d'extrémité de la carte. Toutefois, ce bouchon est une pièce surmoulée, à la fois sur la carte et sur le câble.

Un premier but de l'invention est de proposer une solution plus simple au problème exposé précédemment.

En outre, il est souvent avantageux pour ce type de dispositif de pouvoir signaler visuellement un état ou leur état parmi plusieurs états possibles (détection, absence de détection, dysfonctionnement, ...) par une indication lumineuse visible au niveau du boîtier.

La mise en place des moyens de signalisation sur le boîtier ou intégrer dans la paroi du boîtier n'est pas optimale, compte tenu des conditions de montage et des environnements d'utilisation de ces dispositifs.

Une solution connue peut consister à monter les sources lumineuses des moyens de signalisation à l'intérieur du boîtier et à transmettre les informations lumineuses de signalisation par des moyens de transmission de lumière (guide-lumière).

Néanmoins, il en résulte la nécessité d'un positionnement précis du ou des guide(s) lumière par rapport à la ou aux source(s) et le développement spécifique de guide(s) adapté au type de dispositifs précité, sans interférer avec le premier but de l'invention et en préservant l'intégrité et l'étanchéité du dispositif.

Un possible second but de l'invention est de proposer une solution simple à ce second problème.

Enfin, un possible troisième but de invention est de proposer une solution aux deux problèmes exposés ci-dessus sans multiplier les composants, sans complexifier la constitution générale du dispositif concerné et/ou sans compliquer de manière notable son procédé de fabrication.

En vue de fournir une solution au moins au premier problème ci-dessus, invention a pour objet un dispositif capteur ou détecteur du type évoqué précédemment qui est caractérisé en ce qu'il comporte un moyen pour le positionnement et calage mécanique de la carte dans le boîtier, préférentiellement selon un plan médian ou de symétrie longitudinal de ce dernier, une partie au moins dudit moyen étant intégrée au bouchon et consistant en au moins une portion de rainure ou d'encoche apte à recevoir par engagement une extrémité de ladite carte en vue de son maintien calé.

L'invention sera mieux comprise, grâce à la description ci-après, qui se rapporte à des modes de réalisation préférés, donnés à titre d'exemple non limitatifs, et expliqués avec référence aux dessins schématiques annexés, dans lesquels :
La figure 1 est une vue en élévation latérale d'un dispositif capteur ou détecteur selon un mode de réalisation de l'invention ;
La figure 2A est une vue en coupe selon A-A du dispositif représenté figure 1 ;
La figure 2B est une vue en coupe selon B-B du dispositif représenté figure 2A ;
La figure 2C est une vue éclatée du dispositif représenté sur les figures 1, 2A et 2B avant assemblage ;
La figure 3 est une vue en coupe du dispositif des figures 1 et 2 durant la phase de solidification du matériau de remplissage injecté ;
Les figures 4A et 4B sont des vues en perspective selon deux directions différentes du bouchon faisant partie du dispositif selon l'invention ;

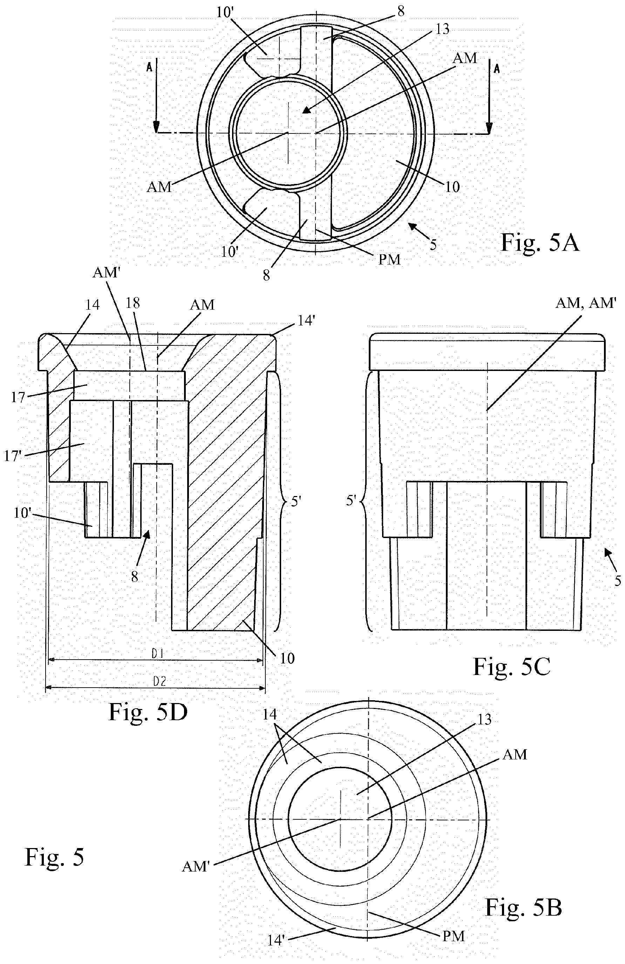

Les figures 5A, 5B et 5C sont respectivement des vues de dessous, de dessus et en élévation latérale du bouchon représenté figures 4A et 4B, et,
La figure 5D est une vue en coupe selon A-A du bouchon représenté figure 5A.

Les figures 1, 2 et 3 montrent un dispositif 1 capteur ou détecteur, comprenant un boîtier 2 sous la forme d'un corps creux tubulaire, préférentiellement de section circulaire, avec une première extrémité longitudinale 3 formant face active et une seconde extrémité 3', opposée à la première, dont l'ouverture est traversée par le câble de connexion 4 et est obturée par un bouchon 5 rapporté, fabriqué séparément. Ce dispositif 1 comprenant également une carte ou un support analogue 6, portant les composants électroniques 6', 6" dudit capteur ou détecteur et monté dans ledit boîtier 2, en étant enrobé, préférentiellement totalement noyé, dans un matériau de remplissage 7 isolant, tel qu'une résine ou analogue, présent dans ledit boîtier et comblant sensiblement la totalité du volume intérieur restant de ce dernier.

Conformément à l'invention, le dispositif 1 comporte un moyen 8 pour le positionnement avec calage mécanique de la carte 6 dans le boîtier 2, préférentiellement selon un plan médian ou de symétrie longitudinal PM de ce dernier, une partie au moins dudit moyen 8 étant intégrée au bouchon 5 et consistant en au moins une portion de rainure ou d'encoche apte à recevoir par engagement une extrémité 6'" de ladite carte 6 en vue de son maintien calé.

La prévision d'un moyen 8 permet d'assurer un positionnement répétable, préférentiellement centré, de la carte 6 dans le boîtier 2 lors de l'assemblage du dispositif 1 et durant la phase d'injection et de solidification du matériau de remplissage 7. Ainsi, la carte 6 est maintenue dans une position indexée déterminée par simple engagement mécanique (préférentiellement ajusté) ou emboîtement de l'extrémité 6'" de la carte 6 dans une rainure 8 ou des portions de rainure 8. Bien entendu, la carte 6 avec ses composants 6', 6" sera conformée et dimensionnée pour ne pas venir en contact avec le boîtier 2 (respect d'une distance d'isolement minimal au moins au niveau des régions sensibles - absence de nécessité d'un revêtement intérieur isolant) lorsqu'elle est calée en position de montage par le moyen 8, autorisant ainsi son enrobage optimal.

De plus, en intégrant une partie au moins du moyen 8 dans le bouchon 5 assurant l'obturation du boîtier 2, on évite la multiplication des composants, tout en réalisant au moins partiellement une fonction supplémentaire.

Selon un mode de réalisation avantageux de l'invention, et comme le montrent les figures 2C, 4, 5A et 5D, le moyen 8 pour le positionnement et le calage est entièrement intégré au bouchon 5 et comprend au moins une portion de rainure ou encoche 8 ménagée dans le bouchon 5, par exemple délimitée au moins partiellement par des formations saillantes 10, 10' prolongeant la portion longitudinale emboîtée 5' dudit bouchon 5, ladite portion de rainure ou encoche étant apte à recevoir, en vue d'un maintien calé, l'extrémité de la carte 6 située à proximité de la seconde extrémité 3' du boîtier 2.

La rainure 8 peut être une rainure continue, d'un seul tenant, ou une rainure composite, c'est-à-dire à structure discontinue, formée de plusieurs portions de rainure alignées et mutuellement espacées.

Par maintien calé, on entend essentiellement un blocage en position dans une direction perpendiculaire au plan de la rainure ou des portions de rainure 8 (plan confondu avec le plan PM sur les figures 1, 2B, 5A et 5B), mais également un calage au fond de la rainure composite 8 (blocage dans la direction longitudinale du boîtier 2). Eventuellement, l'extrémité de la carte 6 peut également être au moins légèrement pincée entre les formations 10, 10'.

Préférentiellement, le moyen 8 pour le positionnement présents au niveau du bouchon 5 consiste en deux portions de rainure 8 espacées et alignées selon un plan médian PM du boîtier 2 et la carte 6 présente, au niveau de son extrémité située à proximité de la seconde extrémité 3' du boîtier 2, une découpe 11 définissant deux pattes ou ailes latérales 11' destinées à venir en engagement dans lesdites portions de rainures 8 du bouchon 5.

Cette découpe 11 autorise l'introduction d'une longueur de câble 4 augmentée dans le boîtier 2 et permet à ce dernier de participer à un centrage automatique de la carte 6 par rapport au bouchon 5 et donc également par rapport au boîtier 2 (l'extrémité du câble 4, maintenue rigidement dans le bouchon 5, s'étend entre les deux pattes 11' et empêche ainsi tout mouvement de l'extrémité 6'" de la carte 6 dans le plan AM des portions de rainure 8).

Selon une caractéristique de l'invention, il peut être prévu que la carte 6 soit reçue dans les portions de rainure formant le moyen 8 de positionnement et de calage mécanique, préférentiellement au niveau de deux pattes ou ailes 11' d'extrémité avec un pincement, au moins suffisant pour retenir ladite carte 6.

La carte 6 est ainsi maintenue à une seule de ses deux extrémités opposées, autorisant un positionnement optimal et une interférence limitée avec l'enrobage.

De manière avantageuse, et pour permettre notamment une indexation du dispositif 1 et/ou faciliter le raccordement avec la carte 6, le bouchon 5 comporte un orifice de passage 13 pour le câble 4, qui est décalé par rapport à l'axe médian longitudinal AM du boîtier 2. Cet orifice de passage 13 traversant le corps 9 obturateur (par exemple discoïdal) du bouchon 5 présente avantageusement une extension longitudinale déterminée de telle manière que ledit bouchon 5 forme un manchon guide-câble (figures 1, 2B, 3 et 5).

La prévision d'un bouchon 5 présentant une certaine épaisseur permet également de définir des surfaces de contact annulaires de grande hauteur ou largeur entre ce bouchon et la face interne de l'extrémité ouverte du boîtier obturée par ce bouchon (de manière à assurer une bonne étanchéité).

Avantageusement, il peut également être prévu que l'axe médian AM' de l'orifice de passage 13 soit décalé latéralement par rapport au plan médian PM du boîtier 2, que le câble de connexion 4 se prolonge jusque dans la découpe 11 ménagée dans l'extrémité correspondante de la carte 6 et que les formations saillantes 10, 10' définissant les portions de rainure 8 prolongent de manière fractionnelle le manchon guide-câble défini par l'orifice de passage 13, dans la portion emboîtée 5' au moins du bouchon 5. On aboutit ainsi à un maintien latéral du câble 4 jusqu'au niveau de la carte 6, tout en autorisant un enrobage dudit câble 4 et de l'extrémité de la carte 6 du fait de la discontinuité des formations 10, 10' (présence d'espaces intercalaires dégagés).

Selon une variante de réalisation pratique de l'invention, permettant d'augmenter davantage encore la tenue mécanique du câble 4, en particulier sa résistance à l'arrachement par rapport au boîtier 2 par traction, il peut, en outre, être prévu que l'orifice de passage 13 pour le câble de connexion 4 du dispositif 1 présente des sections variables suivant son axe médian longitudinal AM' et comprend préférentiellement au moins un premier segment longitudinal 17 ouvert sur l'extérieur, dont la section correspond à celle dudit câble 4 et au moins un second segment longitudinal 17' ouvert sur l'intérieur, dont la section est au moins légèrement supérieure à celle dudit câble 4. Le premier segment 17 peut se terminer éventuellement par une formation annulaire radialement saillante constituant une collerette de rétention orientée, suivie d'un évasement chanfreiné 14 et le second segment 17' peut se prolonger par les formations saillantes 10, 10' du moyen 8 pour le positionnement intégré au bouchon 5.

La présence du matériau de remplissage 7 sur une grande longueur autour du câble 4 confère également une protection renforcée contre les risques d'infiltration d'eau ou d'humidité.

En accord avec une première variante de réalisation de l'invention, non représentée, un guide de lumière séparée peut être mis en place dans le boîtier 2 pour assurer la transmission des signaux lumineux d'état d'une source 6" portée par la carte 6 vers l'extérieur.

Néanmoins, en accord avec une seconde variante de réalisation préférée de l'invention, ressortant des dessins annexés, aboutissant à une intégration fonctionnelle optimisée, sans composant supplémentaire, le bouchon 5 comporte une formation saillante 10, en prolongement de la portion emboîtée 5', dont l'extrémité est destinée à venir à proximité immédiate ou en contact avec au moins une source lumineuse 6" portée par la carte 6, au moins la partie du bouchon 5 dont la formation saillante 10 forme un prolongement, et préférentiellement la totalité dudit bouchon 5, étant réalisée en un matériau apte à transmettre la lumière, par exemple un matériau plastique sensiblement transparent ou au moins translucide.

Ainsi, le bouchon 5 lui-même, ou au moins une partie de ce dernier, constitue un guide-lumière.

De plus, compte tenu du positionnement calé de la carte 6 par rapport au bouchon 5, ce guide-lumière intégré est systématiquement situé de manière optimale par rapport au(x) composant(s) de signalisation lumineuse 6", par exemple du type DEL (diode électroluminescente).

Selon une réalisation pratique préférée, la formation saillante 10 du bouchon 5 destinée à transmettre la lumière d'au moins une source lumineuse 6" portée par la carte 6 correspond à l'une des formations 10, 10' définissant la ou les portion(s) de rainure ou encoche(s) 8.

Ainsi, la rainure composite 8 dans laquelle est positionnée la carte 6 assure un positionnement répétable et donc une distance [guide 10 / DEL 6"] constante et identique, tout en étant toujours située au plus près du guide (formation 10), préférentiellement en contact avec lui.

Cette proximité permet une transmission efficace de la lumière en minimisant la distance [DEL / guide], sans pour autant négliger l'enrobage de la DEL par la résine 7, contribuant ainsi à une protection de la DEL contre l'intrusion d'eau ou d'humidité.

Pour faciliter l'introduction du câble 4 dans l'orifice 13 et son cintrage à proximité de l'entrée de cet orifice, il peut être prévu que l'orifice de passage 13 du bouchon 5 comporte, au niveau de son ouverture vers l'extérieur, un chanfrein 14. De manière additionnelle ou alternative, un chanfrein 14' est éventuellement ménagé sur le pourtour extérieur de la portion du bouchon 5 non emboîtée dans le boîtier 2 et préférentiellement en appui sur le bord de la seconde extrémité 3' du boîtier tubulaire 2.

Le ou les chanfrein(s) 14, 14' permet(tent), lorsque le bouchon 5 forme guide-lumière, d'obtenir une diffusion radiale de la lumière avec un effet "anneau de lumière", également visible latéralement.

Le chanfrein 14 peut éventuellement être un chanfrein double ou à deux pentes différentes.

Le boîtier 2 peut, en fonction de son type de montage, présenter une conformation extérieure déterminée. En particulier, il peut être prévu qu'il consiste en une douille, préférentiellement métallique et à filetage extérieur 15.

Enfin, de manière additionnelle, la portion longitudinale emboîtée du bouchon 5 peut présenter avantageusement une conformation tronconique.

Ainsi, tout en étant réalisé dans une matière plastique rigide (du fait de ses dimensions généralement réduites), par exemple du polypropylène ou du polyamide, ce type de bouchon 5 à forme extérieure conique peut être assemblé sans faire appel à de la colle (ni pour l'étanchéité, ni pour le verrouillage de l'assemblage), simplifiant ainsi l'assemblage du produit final.

En effet, tout en facilitant l'introduction du bouchon 5 dans la douille 2, lorsqu'il arrive quasiment en butée sur l'extrémité 3' de la douille 2, sa forme conique confère audit bouchon 5 un léger montage en force, qui malgré la faible élasticité de la matière plastique qui le compose, lui donne la possibilité d'être monté en étant légèrement ajusté, sans pour autant endommager la douille.

Cette forme conique du bouchon 5 contribue également à l'évacuation d'une bonne partie de l'air contenu dans la douille 2 et ce quasiment jusqu'à l'enfoncement maximum du bouchon 5.

L'invention permet, grâce à l'intégration dans le boîtier et à l'enrobage complet des composants et de la carte, d'aboutir à une double isolation entre, d'une part, les composants électroniques (inclusivement de signalisation lumineuse) et la carte et, d'autre part, l'extérieur, autorisant une alimentation et un fonctionnement à tension élevée sans risque en cas de rupture ou d'impact.

L'invention a également pour objet un procédé de fabrication d'un dispositif capteur ou détecteur 1 comme décrit précédemment.

Ce procédé consiste essentiellement à fournir un boîtier tubulaire 2, un composant 12 de détection (par exemple une bobine ou un arrangement de bobines résinées) destiné à former la face active et obturer une première extrémité longitudinale 3 dudit boîtier 2 tubulaire, une carte électronique 6 portant les composants électroniques 6', 6" du capteur ou détecteur, un câble de connexion 4 et un bouchon 5 apte à obturer la seconde extrémité 3' du boîtier tubulaire 2 et présentant un passage 13 pour le câble, à connecter électriquement entre eux le composant de détection 12, la carte 6 et le câble 4 de connexion, à monter ces composants dans le boîtier 2, et à injecter un matériau de remplissage isolant 7, tel qu'une résine, dans le boîtier 2.

Conformément à l'invention, ce procédé consiste ensuite à mettre en place par emboîtement le bouchon 5 au niveau de la seconde extrémité 3' du boîtier 2 de telle manière que le moyen de positionnement 8, 10, 10' de ce dernier vienne en engagement avec l'extrémité correspondante de la carte 6 et maintienne ce dernier en position dans le boîtier (en porte-à-faux) et que la seconde extrémité 3' soit obturée de manière étanche, à positionner le boîtier 2 de telle manière que l'air résiduel éventuellement présent dans ledit boîtier 2 s'accumule dans une région périphérique 16 éloignée de la carte 6 et de ses composants électroniques 6' et, enfin, à attendre la solidification du matériau de remplissage 7.

Il convient de noter que la disposition excentrée du trou de passage 13 du câble 4 dans le bouchon 5, contribue au repérage de l'orientation de la carte 6 à l'intérieur de la douille 2.

En associant à un tel ensemble, un support de séchage adapté (figure 3 - support procurant de part sa définition une orientation et une inclinaison préférentielle de la douille 2), il est possible de l'extérieur, lors de la phase de séchage de la résine 7, de maîtriser précisément l'endroit ou la région où sera confiné (lors du séchage de la résine) le peu d'air restant dans la douille.

Cet agencement permet de positionner la bulle d'air résiduelle 16 dans une zone dépourvue de composants 6', 6", et de garantir ainsi une bonne imprégnation de résine 7 sur l'ensemble des composants électroniques.

Bien entendu, invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif capteur ou détecteur, comprenant un boîtier (2) sous la forme d'un corps creux tubulaire, préférentiellement de section circulaire, avec une première extrémité longitudinale (3) formant face active et une seconde extrémité (3'), opposée à la première, dont l'ouverture est traversée par un câble de connexion (4) et est obturée par un bouchon (5) rapporté,
ledit dispositif (1) comprenant également une carte ou un support (6) analogue, portant les composants électroniques (6', 6") dudit capteur ou détecteur et monté dans ledit boîtier (2), en étant enrobé, préférentiellement totalement noyé, dans un matériau de remplissage (7) isolant, tel qu'une résine ou analogue, présent dans ledit boîtier et comblant sensiblement la totalité du volume intérieur restant de ce dernier,
ledit dispositif (1) comportant un moyen (8) pour le positionnement et le calage mécanique de la carte (6) dans le boîtier (2), préférentiellement selon un plan médian ou de symétrie longitudinal (PM) de ce dernier, une partie au moins dudit moyen (8) étant intégrée au bouchon (5)
dispositif (1) **caractérisé en ce que** le moyen (8) de positionnement et de calage (10) consiste en au moins une portion de rainure ou d'encoche apte à recevoir par engagement une extrémité (6"') de ladite carte (6) en vue de son maintien calé et **en ce que** la bulle d'air résiduelle (16), résultant du confinement de l'air restant dans le boîtier (2) après séchage de la résine (7), est positionnée dans une région dépourvue de composants (6', 6").

2. Dispositif selon la revendication 1, **caractérisé en ce que** le moyen (8) pour le positionnement et le calage est entièrement intégré au bouchon (5) et comprend au moins une portion de rainure ou encoche (8) ménagée dans le bouchon (5), délimitée au moins partiellement par des formations saillantes (10, 10') prolongeant la portion longitudinale emboîtée (5') dudit bouchon (5), ladite portion de rainure ou encoche étant apte à recevoir, en vue du maintien calé, l'extrémité de la carte (6) située à proximité de la seconde extrémité (3') du boîtier (2).

3. Dispositif selon la revendication 2, **caractérisé en ce que** le moyen (8) pour le positionnement présent au niveau du bouchon (5) consiste en deux portions de rainure (8) espacées et alignées selon un plan médian (PM) du boîtier (2) et **en ce que** la carte (6) présente, au niveau de son extrémité située à proximité de la seconde extrémité (3') du boîtier (2), une découpe (11) définissant deux pattes ou ailes latérales (11') destinées à venir en engagement dans lesdites portions de rainures (8) du bouchon (5).

4. Dispositif selon l'une quelconque des revendications 1 à 3, **caractérisé en ce que** la carte (6) est reçue dans les portions de rainure formant le moyen (8) de positionnement et de calage mécanique, préférentiellement au niveau de deux pattes ou ailes (11') d'extrémité avec un pincement, au moins suffisant pour retenir ladite carte (6).

5. Dispositif selon l'une quelconque des revendications 1 à 4, **caractérisé en ce que** le bouchon (5) comporte un orifice de passage (13) pour le câble (4), qui est décalé par rapport à l'axe médian longitudinal (AM) du boîtier (2), et **en ce que** ledit orifice de passage (13) traversant le corps (9) obturateur du bouchon (5) présente une extension longitudinale déterminée de telle manière que ledit bouchon (5) forme un manchon guide-câble.

6. Dispositif selon la revendication 3 et la revendication 5, **caractérisé en ce que** l'axe médian (AM') de l'orifice de passage (13) est décalé latéralement par rapport au plan médian (PM) du boîtier (2), **en ce que** le câble de connexion (4) se prolonge jusque dans la découpe (11) ménagée dans l'extrémité correspondante de la carte (6) et **en ce que** les formations saillantes (10, 10') définissant les portions de rainure (8) prolongent de manière fractionnelle le manchon guide-câble défini par l'orifice de passage (13), dans la portion emboîtée (5') au moins du bouchon (5).

7. Dispositif selon l'une quelconque des revendications 1 à 6, **caractérisé en ce que** le bouchon (5) comporte une formation saillante (10), en prolongement de la portion emboîtée (5'), dont l'extrémité est destinée à venir à proximité immédiate ou en contact avec au moins une source lumineuse (6") portée par la carte (6), au moins la partie du bouchon (5) dont la formation saillante (10) forme un prolongement, et préférentiellement la totalité dudit bouchon (5), étant réalisée en un matériau apte à transmettre la lumière, par exemple un matériau plastique sensiblement transparent ou au moins translucide.

8. Dispositif selon la revendication 7 et l'une quelconque des revendications 2 et 3, **caractérisé en ce que** la formation saillante (10) du bouchon (5) destinée à transmettre la lumière d'au moins une source lumineuse (6") portée par la carte (6) correspond à l'une des formations (10, 10') définissant la ou les portion(s) de rainure ou encoche(s) (8).

9. Dispositif selon l'une quelconque des revendications 5 et 6, **caractérisé en ce que** l'orifice de passage (13) du bouchon (5) comporte, au niveau de son ouverture vers l'extérieur, un chanfrein (14), un autre chanfrein (14') étant éventuellement ménagé sur le pourtour extérieur de la portion du bouchon (5) non emboîtée dans le boîtier (2) et préférentiellement en appui sur le bord de la seconde extrémité (3') du boîtier tubulaire (2).

10. Dispositif selon l'une quelconque des revendications 1 à 9, **caractérisé en ce que** le boîtier (2) consiste en une douille, préférentiellement métallique et/ou à filetage extérieur (15), et **en ce que** la portion longitudinale (5') du bouchon (5) emboîtée dans le boîtier (2) présente une conformation tronconique.

11. Dispositif selon l'une quelconque des revendications 5, 6 et 9, **caractérisé en ce que** l'orifice de passage (13) pour le câble de connexion (4) du dispositif (1) présente des sections variables suivant son axe médian longitudinal (AM') et comprend préférentiellement au moins un premier segment longitudinal (17) ouvert sur l'extérieur, dont la section correspond à celle dudit câble (4) et au moins un second segment longitudinal (17') ouvert sur l'intérieur, dont la section est au moins légèrement supérieure à celle dudit câble (4), le premier segment (17) se terminant éventuellement par une formation annulaire radialement saillante constituant une collerette de rétention orientée, suivie d'un évasement chanfreiné (14) et le second segment (17') se prolongeant par les formations saillantes (10, 10') du moyen (8) pour le positionnement intégré au bouchon (5).

12. Procédé de fabrication d'un dispositif capteur ou détecteur selon l'une quelconque des revendications 1 à 11, consistant à fournir un boîtier tubulaire, un composant de détection destiné à former la face active et obturer une première extrémité longitudinale dudit boîtier tubulaire, une carte électronique portant les composants électroniques du capteur ou détecteur, un câble de connexion et un bouchon apte à obturer la seconde extrémité du boîtier tubulaire et présentant un passage pour le câble, à connecter électriquement entre eux le composant de détection, la carte et le câble de connexion, à monter ces composants dans le boîtier, et à injecter un matériau de remplissage isolant, tel qu'une résine, dans le boîtier, procédé **caractérisé en ce qu'**il consiste ensuite à mettre en place par emboîtement le bouchon (5) au niveau de la seconde extrémité (3') du boîtier (2) de telle manière que le moyen de positionnement (8, 10, 10') de ce dernier vienne en engagement avec l'extrémité correspondante de la carte (6) et maintienne cette dernière en position dans le boîtier et que la seconde extrémité (3') soit obturée de manière étanche, à positionner le boîtier (2) de telle manière que l'air résiduel éventuellement présent dans ledit boîtier (2) s'accumule dans une région périphérique (16) éloignée de la carte (6) et de ses composants électroniques (6') et, enfin, à attendre la solidification du matériau de remplissage (7).

## Patentansprüche

1. Sensor- oder Detektorvorrichtung, ein Gehäuse (2) in Form eines rohrförmigen, hohlen Körpers, vorzugsweise mit kreisförmigem Querschnitt, umfassend, mit einem ersten Ende in Längsrichtung (3), das die aktive Seite bildet, und einem zweiten, dem ersten entgegengesetzten Ende (3'), dessen Öffnung von einem Verbindungskabel (4) durchquert wird und von einem eingefügten Stopfen (5) verschlossen wird,
wobei die genannte Vorrichtung (1) ebenfalls eine Karte oder einen ähnlichen Träger (6) elektronischer Komponenten (6', 6") des genannten Sensors oder Detektors aufweist, der im genannten Gehäuse (2) montiert ist, wobei er mit einem isolierenden Füllwerkstoff (7), wie einem Harz oder Ähnlichem, umhüllt oder vorzugsweise darin vollständig eingegossen ist, der sich im genannten Gehäuse befindet und im Wesentlichen dessen gesamten freibleibenden Innenraum ausfüllt,
wobei die genannte Vorrichtung (1) ein Mittel (8) zur Positionierung und zum mechanischen Einkeilen der Karte (6) im Gehäuse (2) aufweist, vorzugsweise in einer Mittel- oder Längssymmetrieebene (PM) des letzteren, wobei mindestens ein Teil des genannten Mittels (8) in den Stopfen (5) integriert ist,
Vorrichtung (1), **dadurch gekennzeichnet, dass** das Mittel (8) zur Positionierung und zum Einkeilen (10) aus mindestens einem Rillen- oder Kerbenabschnitt besteht, der geeignet ist, durch Einstecken ein Ende (6"') der genannten Karte (6) zu deren eingekeiltem Halten aufzunehmen, und dadurch, dass sich die Restluftblase (16), die durch den Einschluss von im Gehäuse (2) nach Trocknung des Harzes (7) verbleibender Luft entsteht, in einem Bereich frei von Komponenten (6', 6") befindet.

2. Vorrichtung nach Patentanspruch 1, **dadurch gekennzeichnet, dass** das Mittel (8) zur Positionierung und zum Einkeilen vollständig in den Stopfen (5) integriert ist und mindestens einen Rillen- oder Kerbenabschnitt (8) umfasst, der im Stopfen (5) ausgebildet ist und mindestens teilweise von vorspringenden Bildungen (10, 10') begrenzt ist, die den eingesteckten Längsabschnitt (5') des genannten Stopfens (5) fortsetzen, wobei der genannte Rillen- oder Kerbenabschnitt geeignet ist, das Ende der genannten Karte (6) zu deren eingekeiltem Halten aufzunehmen, das sich nahe dem zweiten Ende (3') des Gehäuses (2) befindet.

3. Vorrichtung nach Patentanspruch 2, **dadurch gekennzeichnet, dass** das in Höhe des Stopfens (5) vorhandene Positionierungsmittel (8) aus zwei voneinander beabstandeten und in einer Mittelebene (PM) des Gehäuses (2) ausgerichteten Rillenabschnitten (8) besteht und dadurch, dass die Karte (6) an ihrem nahe dem zweiten Ende (3') des Gehäuses (2) gelegenen Ende einen Ausschnitt (11) aufweist, der zwei seitliche Füße oder Flügel (11') definiert, die dazu bestimmt sind, in die genannten Rillenabschnitte (8) des Stopfens (5) einzugreifen.

4. Vorrichtung nach irgendeinem der Patentansprüche 1 bis 3, **dadurch gekennzeichnet, dass** die Karte (6) in den Rillenabschnitten, die das Mittel (8) zur Positionierung und zum mechanischen Einkeilen bilden, vorzugsweise in Höhe der beiden endständigen Füße oder Flügel (11') eingeklemmt aufgenommen wird, mit mindestens ausreichender Klemmung, um die genannte Karte (6) festzuhalten.

5. Vorrichtung nach irgendeinem der Patentansprüche 1 bis 4, **dadurch gekennzeichnet, dass** der Stopfen (5) eine Durchtrittsöffnung (13) für das Kabel (4) aufweist, die gegenüber der Längsmittelachse (AM) des Gehäuses (2) versetzt ist, und dadurch, dass die genannte Durchtrittsöffnung (13), die den Verschlusskörper (9) des Stopfens (5) durchquert, eine derart festgelegte Längserstreckung aufweist, dass der genannte Stopfen (5) eine Kabelführungsmuffe bildet.

6. Vorrichtung nach Patentanspruch 3 und Patentanspruch 5, **dadurch gekennzeichnet, dass** die Mittelachse (AM') der Durchtrittsöffnung (13) gegenüber der Mittelebene (PM) des Gehäuses (2) seitlich versetzt ist, dadurch, dass sich das Verbindungskabel (4) bis in den Ausschnitt (11), der am entsprechenden Ende der Karte (6) ausgenommen wurde, fortsetzt, und dadurch, dass die vorspringenden Bildungen (10, 10'), die die Rillenabschnitte (8) definieren, in unterbrochener Form die Kabelführungsmuffe, die durch die Durchtrittsöffnung (13) umgrenzt wird, mindestens im eingesteckten Abschnitt (5') des Stopfens (5) fortsetzen.

7. Vorrichtung nach irgendeinem der Patentansprüche 1 bis 6, **dadurch gekennzeichnet, dass** der Stopfen (5) in der Verlängerung des eingesteckten Abschnittes (5') eine vorspringende Bildung (10) aufweist, deren Ende dazu bestimmt ist, in unmittelbare Nähe oder in Berührung mit mindestens einer Lichtquelle (6") zu kommen, die von der Karte (6) getragen wird, wobei mindestens der Teil des Stopfens (5), von dem die vorspringende Bildung (10) eine Fortsetzung bildet, und vorzugsweise der gesamte Stopfen (5) aus einem Werkstoff gefertigt ist, der in der Lage ist, Licht zu übertragen, beispielsweise aus einem im Wesentlichen durchsichtigen oder mindestens durchscheinenden Kunststoff.

8. Vorrichtung nach Patentanspruch 7 und irgendeinem der Patentansprüche 2 und 3, **dadurch gekennzeichnet, dass** die vorspringende Bildung (10) des Stopfens (5), die zur Übertragung des Lichtes mindestens einer Lichtquelle (6"), die von der Karte (6) getragen wird, bestimmt ist, einer der Bildungen (10, 10') entspricht, die den oder die Rillen- oder Kerbenabschnitt(e) (8) definieren.

9. Vorrichtung nach irgendeinem der Patentansprüche 5 und 6, **dadurch gekennzeichnet, dass** die Durchtrittsöffnung (13) des Stopfens (5) im Bereich ihrer Öffnung nach außen eine Fase (14) aufweist, wobei eine andere Fase (14') eventuell am Außenumfang des Bereichs des Stopfens (5) ausgebildet ist, der nicht ins Gehäuse (2) eingesteckt ist und vorzugsweise am Rand des zweiten Endes (3') des rohrförmigen Gehäuses (2) anliegt.

10. Vorrichtung nach irgendeinem der Patentansprüche 1 bis 9, **dadurch gekennzeichnet, dass** das Gehäuse (2) aus einer Hülse besteht, vorzugsweise aus Metall und/oder mit Außengewinde (15), und dadurch, dass der Längsabschnitt (5') des Stopfens (5), der ins Gehäuse (2) eingesteckt wird, eine Kegelstumpfform aufweist.

11. Vorrichtung nach irgendeinem der Patentansprüche 5, 6 und 9, **dadurch gekennzeichnet, dass** die Durchtrittsöffnung (13) für das Verbindungskabel (4) der Vorrichtung (1) entlang seiner Längsmittelachse (AM') veränderliche Querschnitte aufweist und vorzugsweise mindestens einen ersten Längsabschnitt (17) aufweist, der sich nach außen öffnet, dessen Querschnitt dem des genannten Kabels (4) entspricht, und mindestens einen zweiten Längsabschnitt (17'), der sich nach innen öffnet, dessen Querschnitt mindestens geringfügig größer ist, als der des genannten Kabels (4), wobei der erste Abschnitt (17) eventuell in einer ringförmigen Bildung endet, die radial vorsteht und einen Innenbord zur gerichteten Rückhaltung bildet, gefolgt von einer angefasten Erweiterung (14), und sich der zweite Abschnitt (17') in den vorspringenden Bildungen (10, 10') des Mittels (8) zur Positionierung fortsetzt, das in den Stopfen (5) integriert ist.

12. Verfahren zur Herstellung einer Sensor- oder Detektorvorrichtung nach irgendeinem der Patentansprüche 1 bis 11, darin bestehend, ein rohrförmiges Gehäuse bereitzustellen, eine Detektionskomponente, die dazu bestimmt ist, die aktive Vorderseite zu bilden und ein erstes Ende in Längsrichtung des genannten rohrförmigen Gehäuses zu verschließen, eine Leiterkarte, die die elektronischen Komponenten des Sensors oder Detektors trägt, ein Verbindungskabel und einen Stopfen, der geeignet ist, das zweite Ende des rohrförmigen Gehäuses zu verschließen, und der einen Durchtritt für das Kabel aufweist, um die Detektionskomponente, die Karte und das Verbindungskabel elektrisch leitend miteinander zu verbinden, diese Komponenten in das Gehäuse zu montieren und einen isolierenden Füllwerkstoff, wie etwa ein Harz, in das Gehäuse zu spritzen, Verfahren, **dadurch gekennzeichnet, dass** es danach darin besteht, durch Einstecken den Stopfen (5) am zweiten Ende (3') des Gehäuses (2) derart einzusetzen, dass das Positionierungsmittel (8, 10, 10') des letztgenannten mit dem entsprechenden Ende der Karte(6) in Eingriff gelangt und diese im Gehäuse in Position hält und dass das zweite Ende (3') abgedichtet verschlossen ist, das Gehäuse (2) derart zu positionieren, dass die eventuell im genannten Gehäuse (2) verbleibende Restluft sich in einem Randbereich (16) fern von der Karte(6) und ihren elektronischen Komponenten (6') sammelt, und schließlich die Verfestigung des Füllwerkstoffes (7) abzuwarten.

## Claims

1. Sensor or detector device, comprising a housing (2) in the form of a tubular hollow body, preferentially of circular section, with a first longitudinal end (3) forming an active face and a second end (3'), opposite the first, the aperture of which is passed through by a connecting cable (4) and is blocked by an added plug (5),
said device (1) also comprising a card or a similar support (6), bearing the electronic components (6', 6") of said sensor or detector and mounted in said housing (2), and being coated, preferentially totally embedded, in an insulating filling material (7), such as a resin or the like, present in said housing and filling substantially all the remaining internal volume thereof,
said device (1) comprising a means (8) for positioning and mechanically securing the card (6) in the housing (2), preferentially along a median plane or longitudinal plane of symmetry (PM) thereof, at least a part of said means (8) being incorporated in the plug (5)
said device (1) being **characterized in that** means (8) for positioning and securing (10) consists of at least a portion of a groove or of a notch capable of engaging and receiving an end (6"') of said card (6) for it to be held secured and **in that** the residual air bubble (16), resulting from the containment of the air remaining in housing (2) after drying of the resin (7), is positioned in a region without components (6', 6").

2. Device according to Claim 1, **characterized in that** the means (8) for positioning and securing is entirely incorporated in the plug (5) and comprises at least a portion of a groove or notch (8) formed in the plug (5), delimited at least partially by protruding formations (10, 10') extending the inserted longitudinal portion (5') of said plug (5), said portion of groove or notch being capable of receiving, in order to hold secured, the end of the card (6) situated in proximity to the second end (3') of the housing (2).

3. Device according to Claim 2, **characterized in that** the means (8) for positioning present at the plug (5) level consists of two portions of groove (8) spaced apart and aligned on a median plane (PM) of the housing (2) and **in that** the card (6) has, at its end situated in proximity to the second end (3') of the housing (2), a cut-out (11) defining two lateral tabs or wings (11') intended to come to be engaged in said portions of grooves (8) of the plug (5).

4. Device according to any one of Claims 1 to 3, **characterized in that** the card (6) is received in the portions of groove forming the positioning and mechanical securing means (8), preferentially at the level of two end tabs or wings (11') with a pinch, at least sufficient to retain said card (6).

5. Device according to any one of Claims 1 to 4, **characterized in that** the plug (5) comprises a through orifice (13) for the cable (4), which is offset in relation to the longitudinal median axis (AM) of the housing (2), and **in that** said through orifice (13) passing through the locking body (9) of the plug (5) has a longitudinal extent determined in such a way that said plug (5) forms a cable-guide sleeve.

6. Device according to Claim 3 and Claim 5, **characterized in that** the median axis (AM') of the through orifice (13) is offset laterally in relation to the median plane (PM) of the housing (2), and **in that** the connecting cable (4) is extended just into the cutout (11) formed in the corresponding end of the card (6) and **in that** the protruding formations (10, 10') defining the portions of groove (8) fractionally extend the cable-guide sleeve defined by the through orifice (13), in the inserted portion (5') at least of the plug (5).

7. Device according to any one of Claims 1 to 6, **characterized in that** the plug (5) comprises a protruding formation (10), in extension of the inserted portion (5'), the end of which is intended to come in immediate proximity to or into contact with at least one light source (6") borne by the card (6), at least the part of the plug (5) of which the protruding formation (10) forms an extension, and preferentially all of said plug (5), being produced in a material capable of transmitting light, for example a substantially transparent or at least translucent plastic material.

8. Device according to Claim 7 and either one of Claims 2 and 3, **characterized in that** the protruding formation (10) of the plug (5) intended to transmit the light from at least one light source (6") borne by the card (6) corresponds to one of the formations (10, 10') defining the portion(s) of groove or notch(es) (8).

9. Device according to either one of Claims 5 and 6, **characterized in that** the through orifice (13) of the plug (5) comprises, at its aperture to the outside, a chamfer (14), another chamfer (14') being possibly formed on the outer perimeter of the portion of the plug (5) not inserted in the housing (2) and preferentially bearing on the edge of the second end (3') of the tubular housing (2).

10. Device according to any one of Claims 1 to 9, **characterized in that** the housing (2) consists of a bush, preferentially metallic and/or with outer threading (15), and **in that** the longitudinal portion (5') of the plug (5) inserted in the housing (2) has a tapered conformation.

11. Device according to any one of Claims 5, 6 and 9, **characterized in that** the through orifice (13) for the connecting cable (4) of the device (1) has variable sections along its longitudinal median axis (AM') and preferentially comprises at least one first longitudinal section (17) that is open to the outside, the section of which corresponds to that of said cable (4) and at least one second longitudinal segment (17') that is open to the inside, the section of which is at least slightly greater than that of said cable (4), the first segment (17) possibly being terminated by a radially protruding annular formation forming an oriented retaining collar, followed by a chamfered flare (14) and the second segment (17') being extended by the protruding formations (10, 10') of the means (8) for positioning incorporated in the plug (5).

12. Method for manufacturing a sensor or detector device according to any one of Claims 1 to 11, consisting in providing a tubular housing, a detection component intended to form the active face and block a first longitudinal end of said tubular housing, an electronic card bearing the electronic components of the sensor or detector, a connecting cable and a plug capable of blocking the second end of the tubular housing and having a passage for the cable, in electrically interconnecting the detection component, the card and the connecting cable, in mounting these components in the housing, and in injecting an insulating filling material, such as a resin, into the housing, said method being **characterized in that** it then consists in fitting, by insertion, the plug (5) at the second end (3') of the housing (2) in such a way that the positioning means (8, 10, 10') thereof comes to be engaged with the corresponding end of the card (6) and holds the latter in position in the housing and that the second end (3') is blocked in a seal-tight manner, in positioning the housing (2) in such a way that the residual air possibly present in said housing (2) accumulates in a peripheral region (16) away from the card (6) and its electronic components (6') and, finally, in awaiting the solidification of the filling material (7).
